## Europäisches Patentamt
## European Patent Office
## Office européen des brevets

(11) Numéro de publication: **0 196 966**
**B1**

(12) # FASCICULE DE BREVET EUROPÉEN

(45) Date de publication du fascicule du brevet:
**10.08.88**

(51) Int. Cl.⁴: **F 16 D 23/14**

(21) Numéro de dépôt: **86400628.3**

(22) Date de dépôt: **25.03.86**

(54) **Butée de débrayage, notamment pour véhicule automobile.**

(30) Priorité: **01.04.85 FR 8504925**
**03.09.85 FR 8513048**

(43) Date de publication de la demande:
**08.10.86 Bulletin 86/41**

(45) Mention de la délivrance du brevet:
**10.08.88 Bulletin 88/32**

(84) Etats contractants désignés:
**DE GB**

(56) Documents cité:
**EP-A-0 030 165**
**FR-A-2 078 122**
**FR-A-2 195 297**
**FR-A-2 533 281**
**GB-A-2 009 355**

(73) Titulaire: **VALEO, 64 Avenue de la Grande Armée,
F-75017 Paris (FR)**

(72) Inventeur: **Gay, Christian, 36 Rue Labat, F-75018
Paris (FR)**
Inventeur: **Lassiaz, Philippe, 19 Rue Thiers, F-92100
Boulogne (FR)**

(74) Mandataire: **CABINET BONNET- THIRION, 95
Boulevard Beaumarchais, F-75003 Paris (FR)**

EP 0 196 966 B1

LIBER, STOCKHOLM 1988

## Description

La présente invention concerne d'une manière générale les butées de débrayage, et plus particulièrement celles destinées à l'équipement des véhicules automobiles.

Ainsi qu'on le sait, par exemple du FR-A-2 078 122, une telle butée de débrayage comporte, globalement, un élément de manoeuvre, qui, soit directement, soit indirectement, est destiné à être soumis à l'action d'un organe de commande, en pratique une fourchette de débrayage, un élément d'attaque, qui, destiné à agir sur le dispositif débrayeur d'un embrayage, soit directement, soit indirectement, est en appui axial sur l'élément de manoeuvre, et des moyens d'attelage qui assujettissent axialement ledit élément d'attaque audit élément de manoeuvre.

La présente invention vise plus particulièrement la réalisation de ces moyens d'attelage.

De manière plus précise, elle a pour objet, une butée de débrayage, notamment pour véhicule automobile, du genre comportant un élément de manoeuvre, qui, soit directement, commande, en pratique une fourchette de débrayage, un élément d'attaque, qui, destiné à agir sur le dispositif débrayeur d'un embrayage, est, soit directement, soit indirectement, en appui axial sur l'élément de manoeuvre, et des moyens d'attelage, qui, assujettissent axialement ledit élément d'attaque audit élément de manoeuvre, cette butée de débrayage étant caractérisée en ce que lesdits moyens d'attelage sont d'un seul tenant avec une plaque qui, sensiblement plane, a globalement une configuration en U, avec deux bras globalement parallèles l'un à l'autre réunis l'un à l'autre par une partie médiane courbe en forme d'anse, et ils se réduisent à deux agrafes, qui, diposées en positions globalement diamétralement opposées l'une par rapport à l'autre, sont chacune respectivement issues des bras de ladite plaque, l'ensemble appartenant à une seule et même pièce.

Il en résulte une grande facilité de montage: la mise en place de la plaque à laquelle appartiennent les moyens d'attelage peut en effet avantageusement se faire par simple engagement radial sur l'élément de manoeuvre.

Lorsque, ce qui est le plus souvent, et notamment dans le cas où il est réalisé en matière synthétique, il est associé, à l'élément de manoeuvre, pour l'action de l'organe de commande, une plaque anti-usure, communément dite plaque d'appui, qui, soit directement, soit indirectement, est en appui axial contre lui, la plaque avec laquelle, suivant l'invention, sont d'un seul tenant les agrafes constituant les moyens d'attelage, peut avantageusement, si désiré, suivant un premier développement de l'invention, former par elle-même une telle plaque d'appui.

Ainsi, une pièce unique, ou pièce d'attelage et d'appui, étant mise en oeuvre pour la constitution de la plaque d'appui et celle des moyens d'attelage, la butée de débrayage suivant l'invention ne comporte avantageusement, pour sa constitution, qu'un nombre minimal de pièces, en sorte que sa réalisation et son montage se trouvent avantageusement et économiquement simplifiés.

Mais, en variante, lorsqu'il est souhaitable qu'elles relèvent de réalisations différentes, la plaque avec laquelle, suivant l'invention, sont d'un seul tenant les agrafes constituant les moyens d'attelage ou plaque d'attelage, appartient à une pièce, ou pièce d'attelage, distincte de la plaque d'appui.

C'est le cas, notamment, lorsque, les doigts de l'organe de commande associés étant relativement ecartés l'un de l'autre, les bras que présente pour leur action la plaque d'appui doivent eux-mêmes avoir une extension suffisante.

En effet, ces bras s'étendent en pratique radialement en porte-à-faux par rapport à la partie courante de la plaque d'appui.

Si, donc, le porte-à-faux correspondant est relativement important, il est nécessaire, pour une bonne résistance mécanique de ces bras, et, notamment, pour leur résistance à la flexion, que l'ensemble soit réalisé en tôle relativement épaisse.

Or, conjointement, les agrafes constituant les moyens d'attelage associés doivent, elles, être préférentiellement réalisées en tôle relativement mince, parce qu'il est souhaitable que, pour le montage à assurer, elles présentent une certaine élasticité.

En pratique, lorsque deux plaques distinctes sont ainsi mises en oeuvre, à savoir une plaque d'attelage et une plaque d'appui, la plaque d'attelage est, suivant une forme préférée de réalisation, directement superposée à la plaque d'appui.

En outre, dans ce cas, les deux branches que présente chacune des agrafes constituant les moyens d'attelage sont de préférence décalées l'une par rapport à l'autre non seulement axialement, mais encore radialement, celle par laquelle une telle agrafe se raccorde à la plaque d'attelage étant globalement plus éloignée de l'axe de l'ensemble que l'autre.

Pour un encombrement diamétral donné, il est ainsi laisse un accès convenable aux bras de la plaque d'appui pour les doigts de l'organe de commande, le dégagement de ceux-ci se trouvant facilité, tout en satisfaisant à une réalisation et à une implantation convenables pour les moyens d'attelage à mettre en oeuvre.

L'élasticité de ceux-ci s'en trouve en outre favorisée.

Dans tous les cas, et s'agissant d'une butée autocentreuse à autocentrage maintenu, c'est-à-dire d'une butée de débrayage dans laquelle l'élément d'attaque est non seulement monté mobile transversalement en tous sens par rapport à l'élément de manoeuvre mais est en outre soumis à des moyens élastiques à action axial propres à le solliciter en direction de celui-ci, ces moyens élastiques à action axiale, suivant un deuxième perfectionnement de l'invention, sont aussi avantageusement d'un seul tenant avec la plaque avec laquelle sont déjà d'un seul tenant les agrafes constituant les moyens d'attelage.

En pratique, ces moyens élastiques à action axiale sont alors avantageusement formés par les agrafes constituant déjà les moyens d'attelage.

La réalisation et le montage de la butée de débrayage suivant l'invention s'en trouvent encore avantageusement et économiquement simplifiés.

Les caractéristiques et avantages de l'invention ressortiront d'ailleurs de la description qui va suivre, à titre d'exemple, en référence aux dessins schématiques annexés sur lesquels:

la figure 1 est une vue latérale de la butée de débrayage suivant l'invention, suivant la flèche I de la figure 2 ;

la figure 2 en est une vue en élévation, vue de l'arrière, suivant la flèche II de la figure 1;

la figure 3 en est une vue en coupe axiale, suivant la ligne III-III de la figure 2;

la figure 4 en est une vue en coupe transversale, suivant la ligne IV-IV de la figure 3;

la figure 5 en est une vue en coupe parallèle à l'axe, suivant la ligne V-V de la figure 4;

la figure 6 est une vue en perspective de la pièce d'attelage et d'appui mise en oeuvre dans cette butée de débrayage;

la figure 7 est une vue en perspective analogue à celle de la figure 6, pour une variante de réalisation de cette pièce d'attelage et d'appui;

la figure 8 est une demi-vue en coupe axiale, suivant la ligne VIII-VIII de la figure 9, d'une variante de réalisation de la butée de débrayage suivant l'invention ;

la figure 9 est une demi-vue en élévation de cette variante de réalisation, vue de l'avant, suivant la flèche IX de la gigure 8;

la figure 10 est une vue latérale analogue à celle de la figure 1, pour une autre variante de réalisation;

la figure 11 est une vue en perspective de la pièce d'attelge et d'appui mise en oeuvre dans cette variante de réalisation;

les figures 12, 13 sont des vues respectivement analogues à celles des figures 1, 2 et concernent une variante de réalisation;

la figure 14 en est une vue en coupe transversale, suivant la ligne XIV-XIV de la figure 12;

la figure 15 est une vue en perspective des plaques d'appui et d'attelage que comporte, dans cette variante de réalisation, la butée de débrayage suivant l'invention.

Ces figures illustrent à titre d'exemple l'application à une butée de débrayage autocentreuse à autocentrage maintenu.

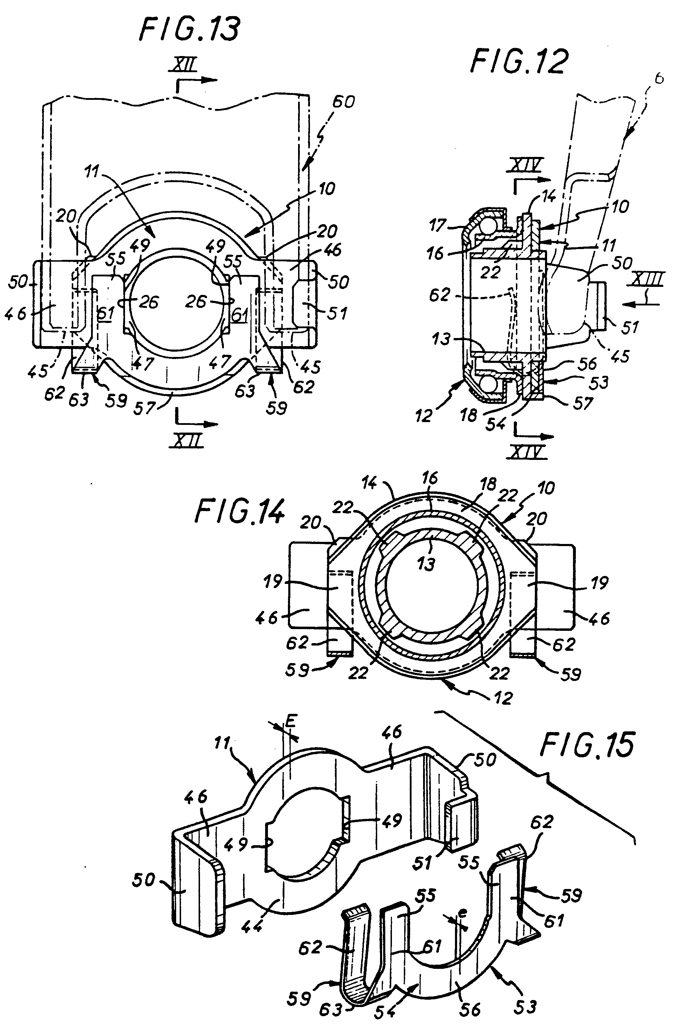

Globalement, cette butée de débrayage comporte un élément de manoeuvre 10, qui, par l'intermédiaire en pratique d'une plaque 11, dite plaque d'appui, en appui axial contre lui, est destiné à être soumis à l'action d'un organe de commande, en pratique une fourchette de débrayage 60, schematisée en traits interrompus sur les figures 12, 13, un élément d'attaque 12, qui, destiné à agir sur le dispositif débrayeur d'un embrayage, également non représenté, est lui aussi en appui axial sur l'élément de manoeuvre, et des moyens d'attelage, détaillés ci-après , qui assujettissent axialement ledit élément d'attaque 12 audit élément de manoeuvre 10.

Dans les formes de réalisation représentées l'élément de manoeuvre 10 comporte, lui-même, axialement, un manchon 13, par lequel il est adapté à être engagé à coulissement sur un quelconque organe de support et de guidage, non représenté, par exemple le manchon, ou "trompette", entourant usuellement l'arbre d'entrée de la boîte de vitesses associée, et, transversalement, pour l'appui axial de l'élément d'attaque 12, un flasque 14.

S'agissant d'un élément de manoeuvre 10 réalisé en matière synthétique, le manchon 13 et le flasque 14 sont d'un seul tenant.

Dans les formes de réalisation représentées, l'élément d'attaque 12 est constitué par un roulement à billes.

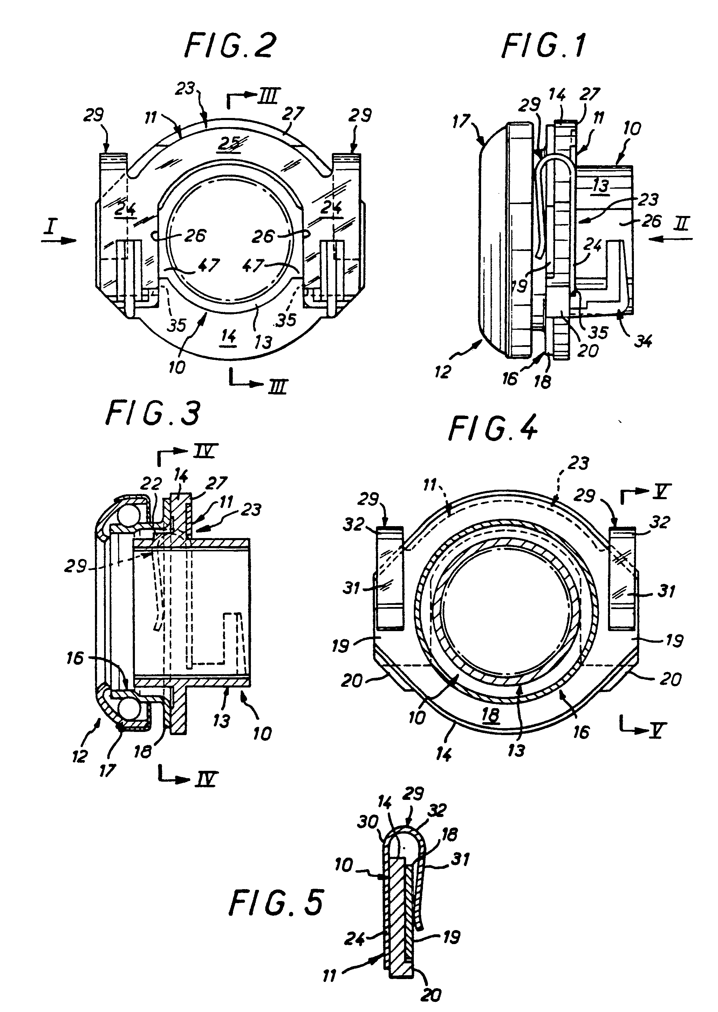

Dans la forme de réalisation plus particulièrement représentée sur les figures 1 à 6, il s'agit d'un roulement à billes dont l'une et l'autre des bagues, c'est-à-dire tant la bague interne 16 que la bague externe 17, sont en tôle.

En pratique, dans cette forme de réalisation, c'est par sa bague interne 16 que l'élément d'attaque 12 prend appui axialement sur l'élément de manoeuvre 10, et, plus précisément, sur le flasque transversal 14 de celui-ci, tandis que, par sa bague externe 17, convenablement conformée en tore à cet effet, il est adapté à porter sur le dispositif débrayeur de l'embrayage à commander.

Pour son appui axial, direct ou indirect, sur le flasque 14 de l'élément de manoeuvre 10, qui se fait, en l'espèce, directement, sans l'intermédiaire d'une quelconque autre pièce, cet élément d'attaque 12 présente, annulairement, à l'extrémité correspondante de sa bague interne 16, et d'un seul tenant avec celle-ci, une collerette radiale 18, dirigée radialement en direction opposée à l'axe de l'ensemble.

Pour des raisons qui apparaîtront ultérieurement, cette collerette radiale 18 forme, latéralement, en positions globalement diamétralement opposées l'un par rapport à l'autre, deux bras 19.

Chacun d'eux a globalement un contour en trapèze isocèle, en se raccordant par sa grande base à la collerette radiale 18 dont il est issu.

La collerette radiale 18 a ainsi globalement un contour en olive à extrémités tronquées, et, en pratique, le flasque 14 de l'élément de manoeuvre 10 a un contour semblable, légèrement à distance, pour ses parties courbes, de celui de la collerette radiale 18.

De préférence, et tel que représenté, pour le blocage en rotation de l'élément d'attaque 12, l'élément de manoeuvre 10 présente, axialement en saillie sur son flasque transversal 14, à la périphérie de celui-ci, au moins un ergot 20.

En pratique, il est prévu un tel ergot 20 pour chacun des bras 19 de la collerette radiale 18 de l'élément d'attaque 12, au droit de la tranche d'un tel bras 19.

En pratique, également, un tel ergot 20 ne s'étend que sur une portion d'une telle tranche, à compter du bord libre droit, formant la petite base, du bras 19 concerné, et le long seulement d'un des bords obliques de celui-ci.

S'agissant d'une butée de débrayage autocentreuse, l'élément d'attaque 12 ainsi au contact du flasque 14 de l'élément de manoeuvre 10 par la collerette radiale 18 de sa bague interne 16 est monté mobile transversalement en tous sens par rapport à cet élément de manoeuvre 10, dans les limites, toutefois, d'un débattement radial déterminé.

C'est la raison pour laquelle il existe, en pratique, un certain jeu entre les ergots 20 de l'élément de manoeuvre 10 et la tranche de la collerette radiale 18 de l'élément d'attaque 12, figures 4 et 5.

De même, il existe un certain jeu, figure 3, entre la partie axiale de la bague interne 16 de cet élément d'attaque 12 et un bossage 22 que présente au droit de celle-ci l'élément de manoeuvre 10 au raccordement entre son manchon axial 13 et son flasque transversal 14.

Ainsi qu'on le notera, les ergots 20 que présente ainsi l'élément de manoeuvre 10 sont l'un et l'autre disposés d'un même côté du plan axial de l'ensemble passant par la zone médiane des bras 19 de l'élément d'attaque 12.

S'agissant d'une butée de débrayage "poussée", c'est-à-dire d'une butée de débrayage apte à agir en poussée sur le dispositif débrayeur de l'embrayage à commander, la plaque d'appui 11 est disposée du côté du flasque 14 de l'élément de manoeuvre 10 opposé à l'élément d'attaque 12.

En pratique, dans les formes de réalisation représentées, cette plaque d'appui 11 est directement en appui axial contre la face correspondante du flasque 14 de l'élément de manoeuvre 10, sans interposition d'une quelconque autre pièce.

Il s'agit d'une plaque, en tôle par exemple, qui ne s'étend globalement annulairement autour de l'axe de l'ensemble que sur une fraction de circonférence.

Suivant l'invention, les moyens d'attelage assujettissant axialement l'élément d'attaque 12 à l'élément de manoeuvre 10 sont d'un seul tenant avec une plaque, qui, dans les formes de réalisation représentées sur les figures 1 à 11, est la plaque d'appui 11, l'ensemble appartenant à une seule et même pièce 23, dite ici par simple commodité pièce d'attelage et d'appui, et, tel que détaillé ci-après, ils se réduisent à deux agrafes 29.

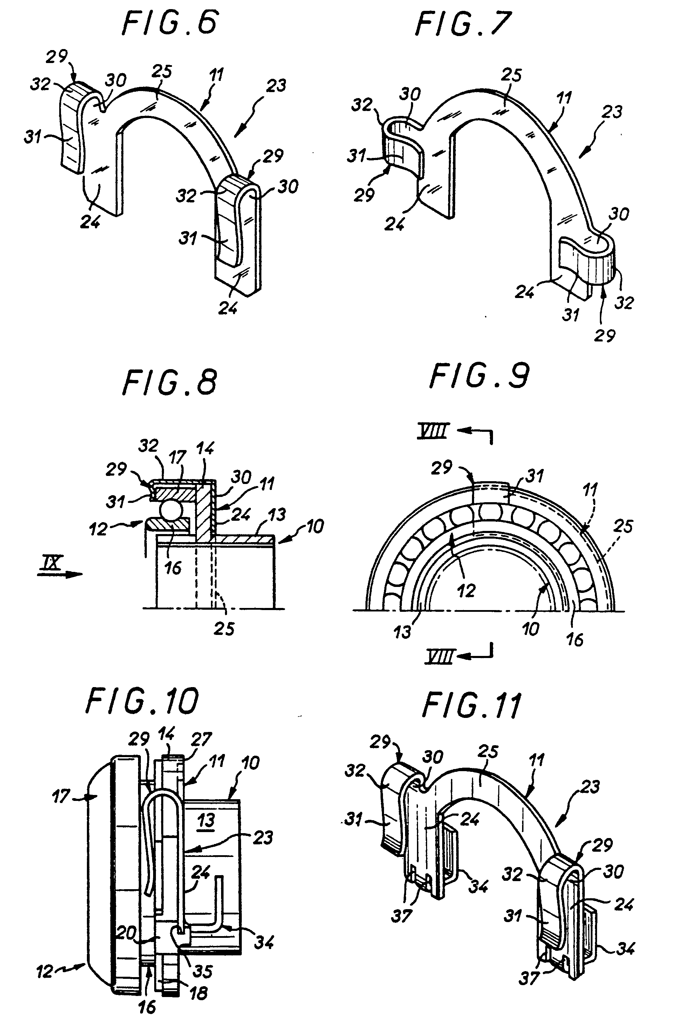

La pièce d'attelage et d'appui 23 est représentée isolément à la figure 6.

En pratique, la plaque d'appui 11 qu'elle forme, est sensiblement plane, et elle a globalement une configuration en U, avec deux bras 24 globalement parallèles l'un à l'autre et une partie médiane courbe 25 réunissant l'un à l'autre, en forme d'anse, ces bras 24.

Dans les formes de réalisation représentées, les bras 24 ont, dans leur partie courante, une largeur supérieure à celle de la partie médiane courbe 25, et ceux au moins de leurs bords respectifs qui sont en regard l'un de l'autre sont parallèles l'un à l'autre, pour coopération en blocage angulaire, chacun respectivement, avec deux bossages 47 à facette plane 26 prévus radialement en saillie à cet effet, aussi bien que pour le guidage de l'organe de commande associé et le blocage en rotation de la butée de débrayage sur celui-ci, en positions globalement diamétralement opposées l'un par rapport à l'autre, sur le manchon axial 13 de l'élément de manoeuvre 10, du même côté du flasque 14 de celui-ci que la plaque d'appui 11.

Conjointement, pour un maintien radial convenable de la plaque d'appui 11, il est prévu, axialement en saillie sur le flasque 14 de l'élément de manoeuvre 10, au droit de la tranche de la partie médiane courbe 25 de cette plaque d'appui 11, une nervure 27, qui s'étend circulairement sur une partie du bord correspondant dudit flasque 14.

Ainsi qu'on le notera, la nervure 27 que présente ainsi l'élément de manoeuvre 10 est disposée en position globalement diamétralement opposée par rapport à ses ergots 20; sa fabrication peut s'en trouver facilitée.

Tel que mentionné ci-dessus, les moyens d'attelage assujettissant axialement l'élément d'attaque 12 à l'élément de manoeuvre 10 se réduisent, suivant l'invention, à deux agrafes 29.

En pratique, disposées en positions diamétralement opposées l'une par rapport a l'autre, ces deux agrafes 29 sont chacune respectivement issues des bras de la plaque d'appui 11.

Dans la forme de réalisation plus particulièrement représentée sur les figures 1 à 6, les deux agrafes 29 sont globalement parallèles l'une à l'autre, et elles sont chacune issues de la partie des bras 24 de la plaque d'appui 11 qui déborde par rapport à la partie médiane courbe 25 de celle-ci, en étant en continuité avec la partie ainsi débordante de ces bras 24.

Chacune de ces deux agrafes 29 a globalement une configuration en U, avec l'une, 30, de ses branches formée au moins pour partie, sinon dans sa quasi totalité, par le bras 24, de la plaque d'appui 11 dont elle est issue, et plus précisément la partie débordante de ce bras 24, l'autre, 31, de ses branches formant un retour globalement parallèlement à un tel bras 24, en se raccordant par une partie médiane courbe 32 à la précédente.

Les agrafes 29 que présente ainsi la pièce d'attelage et d'appui 23 suivant l'invention sont crochetées, c'est-à-dire engagées radialement, à la manière de cavaliers, sur l'ensemble constitué par le flasque transversal 14 de l'élément de manoeuvre et la collerette radiale 18 de l'élément d'attaque 12, au droit des bras lateraux 19 de celle-ci, ainsi qu'il est représenté pour l'une d'elles à la figure 5.

Ces agrafes 29 assurent ainsi un appui axial convenable de l'élément d'attaque 12 contre l'élément de manoeuvre 10, et il est à noter à ce sujet que, par leur extension, les bras latéraux 19 de l'élément d'attaque 12 favorisent avantageusement leur action.

S'agissant d'une butée de débrayage autocentreuse à autocentrage maintenu, l'élément d'attaque 12 doit corollairement être soumis à des moyens élastiques à action axiale propres à le solliciter en direction de l'élément de manoeuvre 10.

Suivant un développement de l'invention, ces moyens élastiques à action axiale sont eux aussi d'un seul tenant avec la plaque d'appui 11, en appartenant, comme elle, et comme les agrafes 29 constituant les moyens d'attelage précédents, à la pièce d'attelage et d'appui 23.

En pratique, ces moyens élastiques à action axiale sont précisément formés par ces agrafes 29, celle, 31, des branches de celles-ci qui forme un retour étant à cet effet, et tel que représenté, conformée de manière à être élastiquement déformable, en coopération avec la partie médiane courbe 32 qui la relie à l'autre, 30, desdites branches.

En pratique, pour un bon contact avec le bras 19 concerné de la collerette radiale 18 de l'élément d'attaque 12, aussi bien que pour en faciliter l'engagement sur celui-ci, l'extrémité de cette branche 31 des agrafes 29 est globalement arrondie, en portion de cylindre, avec sa concavité dirigée du côté opposé audit bras 19, et, a compter de cette extrémité, ladite branche 31 s'écarte de l'autre, jusqu'à se raccorder en continu à la partie médiane courbe 32 correspondante.

Ainsi qu'on le notera, s'étendant globalement parallèlement aux bras 24 de la plaque d'appui 11, dans le sens de la longueur de ceux-ci, la branche 31 des agrafes 29 a avantageusement une longueur relativement grande, et, donc, une bonne élasticité, ce qui permet de se satisfaire au mieux d'éventuelles tolérances de fabrication, l'incidence de celles-ci sur la charge élastique correspondante se trouvant ainsi minimisée.

Par ailleurs, il est prévu, dans la forme de réalisation représentée, pour un bon maintien axial de la butée de débrayage vis-à-vis de son organe de commande, deux doigts en équerre 34, qui, dans cette forme de réalisation, sont venus d'un seul tenant du flasque 14 de l'élément de manoeuvre 10, chacun respectivement en regard des bras 24 de la plaque d'appui 11.

De préférence, et tel que représenté, il est tiré parti de ces doigts en équerre 34 pour former, à leur racine, au voisinage de la facette plane 26 correpondante du manchon 13, une poche 35, dans laquelle vient s'insérer, par la tranche d'extrémité de bon bras 24 correspondant, la plaque d'appui 11, pour parfaire son maintien radial et contribuer à son maintien axial.

Compte tenu de la nervure 27 de l'élément de manoeuvre 10, la mise en place de la plaque d'attelage et d'appui 23 suivant l'invention se fait nécessairement légèrement de biais.

Mais l'inclinaison qu'il faut donc alors lui imprimer se trouve autorisée par l'élasticité de ses agrafes 29.

Dans la variante de réalisation illustrée par la figure 7, ces agrafes 29 sont globalement dans l'alignement l'une de l'autre, en étant orientées en sens opposés l'une par rapport à l'autre.

Elles sont donc issues de ceux des bords latéraux des bras 24 de la plaque d'appui 11 qui sont opposés l'un à l'autre.

Il en est de même dans la variante de réalisation illustrée par les figures 8 et 9.

En outre, dans celle-ci, et en variante des dispositions précédentes, d'une part, au lieu d'être des pièces en tôle, les bagues interne 16 et externe 17 de l'élément d'attaque 12 sont des pièces massives, et, d'autre part, c'est par sa bague externe 17 et, plus précisément, par la tranche correspondante de celle-ci, que cet élément d'attaque 12 est en appui axial contre le flasque transversal 14 de l'élément de manoeuvre 10.

En outre, dans cette variante de réalisation, la branche 31 des agrafes 29 porte directement sur l'autre tranche de cette bague externe 17.

Dans la variante de réalisation illustrée par les figures 10, 11, les doigts en équerre 34 assurant le maintien axial de la butée de débrayage vis-à-vis de son organe de commande sont d'un seul tenant avec la plaque d'appui 11, en appartenant, comme elle, et comme les agrafes 29, à la pièce d'attelage et d'appui 23.

Ils résultent du pliage en U d'un prolongement de chacun des bras 24 de la plaque d'appui 11, prolongement qui est encadré, à sa racine, de deux saignées 37 le séparant de la partie restante de l'extrémité du bras 24 dont il est ainsi issu.

Si désiré, ceux des bords des bras 24 de la plaque d'appui 11 qui sont en regard l'un de l'autre peuvent être chacun bordés par un retour en équerre d'un seul tenant avec celle-ci, pour le guidage de l'organe de commande associé et le blocage en rotation de la butée de débrayage sur celui-ci.

Dans tous les cas, et comme précédemment, des poches 35 peuvent être prévues sur l'élément de manoeuvre 10 pour l'insertion de l extrémité des bras 24 de la plaque d'appui 11, lesdites poches 35 étant par exemple formées par des crochets, qui, venus d'un seul tenant du flasque transversal 14 de cet élément de manoeuvre 10, encadrent les doigts en équerre 34 formés par la plaque d'appui 11.

Dans ce qui précède, la plaque 11 avec laquelle les agrafes 29 formant les moyens d'attelage assujettissant axialement l'élément d'attaque 12 à l'élément de manoeuvre 10 sont d'un seul tenant forme par elle-même la plaque d'appui.

Dans la forme de réalisation représentée sur les figures 12 à 15, sur lesquelles les mêmes éléments ont été désignés par les mêmes références numériques, deux plaques distinctes sont prévues.

Il a tout d'abord une plaque d'appui 11 comme précedemment, cette plaque d'appui 11 est directement en appui axial contre la face correspondante du flasque 14 de l'élément de manoeuvre 10, sans interposition d'une quelconque autre pièce.

Il s'agit, en pratique, d'une plaque métallique, et, plus précisément, d'une plaque en tôle relativement épaisse.

Soit E l'épaisseur de cette plaque d'appui 11.

Dans la forme de réalisation représentée, cette plaque d'appui 11 comporte, d'une part, annulairement autour de l'axe de l'ensemble, une rondelle 44, qui est circonférentiellement continue, et par laquelle elle est adaptée à être engagée sur le manchon 13 de l'élément de manoeuvre 10, et, d'autre part, en positions diamétralement opposées l'un par rapport à l'autre, pour l'appui des doigts 45 de la fourchette de débrayage constituant l'organe de commande 60, deux bras 46, qui, d'un seul tenant avec la rondelle 44, s'étendnt globalement radialement par rapport à celle-ci.

Pour coopération avec les bossages 47 à facette plane 26 que comporte, radialement en saillie le manchon 13 de l'élément de manoeuvre 10 du même côté de son flasque 14 que la plaque d'appui 11, il est prévu, en correspondance sur le contour interne de la rondelle 44 de cette plaque d'appui 11, deux encoches complémentaires 49, par lesquelles cette rondelle 44 est apte à venir en prise avec ces bossages 47.

Les bras 46 de la plaque d'appui 11, qui s'étendent globalement suivant un même diamètre que ceux 19 de l'élément d'attaque 13, et donc que ceux que forme de manière complémeritaire le flasque 14 de l'élément de manoeuvre 10, en s'étendant radialement en porte-à-faux largement au-delà de ces derniers, se terminent chacun, dans la forme de réalisation représentée, par un retour en équerre 50, propre au guidage du doigt 45 correspondant de la fourchette de débrayage constituant l'organe de commande 60 et au blocage en rotation de l'ensemble de la butée de débrayage par rapport à cette dernière.

Pour la retenue axiale, en outre, de la butée de débrayage par rapport à la fourchette de débrayage constituant l'organe de commande 60, le retour en équerre 50 de l'un des bras 46 de la plaque d'appui 11 présente lui-même, le long d'une partie au moins de son bord, parallèlement au bras 46 concerné, en direction de l'axe de l'ensemble, une patte 51, par laquelle l'ensemble de la butée de débrayage est apte à se crocheter sur le doigt 45 correspondant de ladite fourchette de débrayage.

Les moyens d'attelage assujettissant axialement l'élément d'attaque 13 à l'élément de manoeuvre 10 appartiennent par ailleurs à une pièce 53 distincte de la plaque d'appui 11, dite ci-après par simple commodité pièce d'attelage.

Suivant l'invention, cette pièce d'attelage 53 comporte, elle-même, transversalement, pour son appui axial, direct ou indirect, sur la plaque d'appui 11, une plaque 54, dite ci-après par simple commodité plaque d'attelage, et ladite plaque d'attelage 54 ne s'étend globalement circulairement autour de l'axe de l'ensemble que sur une fraction de circonférence.

Dans la forme de réalisation représentée, cette plaque d'attelage 54, qui est sensiblement plane, a globalement une configuration en U, et elle est directement en appui axial contre la plaque d'appui 11, et, plus précisément, contre la rondelle 44 que comporte annulairement celle-ci, en étant directement superposée à cette rondelle 44.

Là plaque d'attelage 54 comporte donc, latéralement, en positions globalement opposées l'un par rapport à l'autre, deux bras 55, et, raccordant l'un à l'autre ces bras 55, une partie médiane courbe 56 arrondie en forme d'anse.

Dans la forme de réalisation représentée, les bras 55 de la plaque, d'attelage 54 s'étendent sensiblement parallèlement l'un à l'autre.

Ils s'étendent en outre sensiblement perpendiculairement aux bras 46 de la plaque d'appui 11, a distance de ceux-ci.

En pratique, ils ne s'étendent radialement que sur une portion de la plaque d'appui 11 correspondant à la rondelle 44 de celle-ci, et ils laissent donc un libre accès aux bras 46 de la plaque d'appui 11 pour les doigts 45 de la fourchette de débrayage constituant l'organe de commande 60.

Pour son blocage en rotation, et donc pour celui de l'ensemble de la pièce d'attelage 53 à laquelle elle appartient, la plaque d'attelage 54 porte radialement contre les bossages 47 de l'élément de manoeuvre 10, par la tranche de son contour interne.

En pratique, dans la forme de réalisation représentée, la plaque d'attelage 54 porte ainsi sur les bossages 47 de l'élément de manoeuvre 12 par le bord interne de ses bras 55, et celui-ci est à cet effet rectiligne sur une partie au moins de sa longueur, pour contact avec la facette plane 26 desdits bossages 47.

Ainsi donc, dans la forme de réalisation représentée, les mêmes bossages 47 de l'élément de manoeuvre 10 assurent conjointement tant le blocage en rotation de la plaque d'appui 11 que celui de la plaque d'attelage 54, et donc de la pièce d'attelage 53 à laquelle appartient cette dernière.

Pour un maintien radial convenable conjoint de la plaque d'appui 11 et de la plaque d'attelage 54, et donc de la pièce d'attelage 53 à laquelle appartient cette dernière, il est prévu, axialement en saillie, sur le flasque 14 de l'élément de manoeuvre 10, au droit de la tranche de la partie médiane courbe 56 de cette plaque d'attelage 54, une nervure 57, qui s'étend circulairement sur une partie du bord correspondant dudit flasque 14.

Ainsi qu'on le notera, dans la forme de réalisation représentée, la nervure 57 que présente ainsi l'élément de manoeuvre 10 est disposée en position diamétralement opposée par rapport aux ergots 20, en ne s'étendant que sur un secteur circulaire inférieur à celui séparant ces derniers; sa fabrication peut s'en trouver facilitée.

Comme précédemment, les moyens d'attelage assujettissant par ailleurs axialement l'élément d'attaque 13 à l'élément de manoeuvre 10 se réduisent à deux agrafes 59, qui, disposées en positions diamétralement opposées l'une par rapport à l'autre, sont chacune respectivement issues de la plaque d'attelage 54, au droit des bras 55 de celle-ci.

En pratique, chacune de ces agrafes 59 a globalement une configuration en U, avec l'une, 61, de ses branches formée au moins pour partie, sinon dans sa quasi totalité, par le bras 55 correspondant de la plaque d'attelage 54, l'autre, 62, de ses branches formant un retour globalement parallèlement à un tel bras 55, en se raccordant par une partie médiane courbe 63 à la précédente.

Les deux branches 61, 62 que présente ainsi chacune des agrafes 59 sont en pratique décalées non seulement axialement l'une par rapport à l'autre, du fait du U qu'elles forment, mais encore radialement, celle, 62, formant un retour pour le bras 55 correspondant de la plaque d'attelage 54 étant globalement plus éloignée de l'axe de l'ensemble que celle, 61, formée au moins pour partie par un tel bras 55.

Autrement dit, la partie de la branche 61 d'une telle agrafe 59 par laquelle celle-ci est issue de la partie médiane courbe 56 de la plaque d'attelage 54, à la racine du bras 55 correspondant de cette plaque d'attelage 54, s'étend globalement obliquement par rapport à sa partie courante, formée, elle, par ledit bras 55.

Par contre, la branche 62 associée s'étend parallèlement à ce bras 55; dans la forme de réalisation représentée, son extrémité libre est en retrait par rapport a celle de la branche 61 formée en l'espèce par celle du bras 55 en question de la plaque d'attelage 54.

Par ailleurs, de préférence, et tel que représenté, suivant une disposition intéressant également la pièce d'attelage et d'appui 23 précédente, cette extrémité libre de la branche 62 s'écarte en oblique, à la manière d'un chanfrein, de la plaque d'attelage 54, pour former avec le bras 55 correspondant de celle-ci, et donc la branche 61 associée, un col d'engagement allant en s'évasant vers l'extérieur.

Enfin, prises dans leur ensemble, les deux agrafes 59 sont globalement parallèles l'une à l'autre dans la forme de réalisation représentée.

La pièce d'attelage 53 ainsi constituée peut par exemple être métallique.

Mais elle peut tout aussi bien être réalisée en matière synthétique.

Quoi qu'il en soit, et ainsi qu'on le notera, son épaisseur e, et notamment celle de la plaque d'attelage 54 qu'elle comporte, est avantageusement largement inférieure à celle E de la plaque d'appui 11.

Par ailleurs, dans la forme de réalisation représentée sur les figures 13 à 15, l'élément de manoeuvre 10 présente, au raccordement entre son manchon axial 13 et son flasque transversal 14, plusieurs bossages 22, convenablement répartis circonférentiellement.

Au montage, et après application de la plaque d'appui 11 contre le flascque transversal 14 de l'élément de manoeuvre 10, la pièce d'attelage 53 est engagée radialement, par ses agrafes 59, sur l'ensemble constitué par cette plaque d'appui 11, ce flasque transversal 14, et la collerette 18 de l'élément d'attaque 12, au droit des bras latéraux 19 de celui-ci.

En pratique, cet engagement ce fait d'abord légèrement de biais, pour franchissement de la nervure 57 de l'élément de manoeuvre 10.

Ansi qu'il est aisé de le comprendre, les agrafes 59 de la pièce d'attelage 53 présentent, par elles-mêmes, axialement, une certaine élasticité.

Comme précédemment, elles sont donc avantageusement à même de constituer directement par elles-mêmes les moyens élastiques à action axiale propres à intervenir axialement entre l'élément de manoeuvre 10 et l'élément d'attaque 12, pour le maintien en position de ce dernier par rapport à l'élément de manoeuvre 10 après son centrage sur celui-ci.

Bien entendu, la présente invention ne se limite pas aux formes de réalisation décrites et représentées, mais englobe toute variante d'exécution et/ou de combinaison de leurs divers éléments.

En particulier, lorsqu'une plaque d'attelage distincte est mise en oeuvre, son appui axial sur la plaque d'appui associée ne se fait pas nécessairement directement; au contraire, il peut se faire indirectement, une quelconque rondelle pouvant par exemple aussi bien être interposée entre ces deux plaques.

Il en est de même pour l'appui axial de l'élément d'attaque sur l'élément de manoeuvre.

## Revendications

1. Butée de débrayage, notamment pour véhicule automobile, du genre comportant un élément de manoeuvre (10), qui, soit directement, soit indirectement, est destiné à être soumis à un organe de commande, en pratique une fourchette de débrayage, un élément d'attaque (12), qui, destiné à agir sur le dispositif débrayeur d'un embrayage, est, soit directement, soit indirectement, en appui axial sur l'élément de manoeuvre (10), et des moyens d'attelage, qui assujettissent axialement ledit élément d'attaque (12) audit élément de manoeuvre (10), caractérisée en ce que lesdits moyens d'attelage sont d'un seul tenant avec une plaque (11, 54) qui, sensiblement plane, a globalement une configuration en U, avec deux bras (24, 55) globalement parallèles l'un à l'autre réunis l'un à l'autre par une partie médiane courbe (25, 56) en forme danse, et ils se réduisent à deux agrafes (29, 59), qui, disposées en positions globalement diamétralement opposées l'une par rapport à l'autre, sont chacune respectivement issues des bras (24, 55) de ladite plaque (11, 54), l'ensemble appartenant à une seule et même pièce (23, 53).

2. Butée de débrayage suivant la revendication 1, caractérisée en ce que, l'élément de manoeuvre (10) étant destiné à être soumis à un organe de commande par l'intermédiaire, soit directement soit indirectement, d'une plaque, dite plaque d'appui, la plaque (11) avec laquelle les agrafes (29) sont d'un seul tenant forme par elle-même ladite plaque d'appui.

3. Butée de débrayage suivant la revendication 2, caractérisée en ce que chacune des agrafes (29) a elle-même globalement une configuration en U, avec l'une (30) de ses branches formée au moins pour partie par le bras (24) de la plaque (11) dont elle est issue, et l'autre (31) formant un retour globalement parallèlement à celui-ci.

4. Butée de débrayage suivant l'une quelconque des revendications 2, 3, caractérisée en ce que les deux agrafes (29) sont globalement parallèles l'une à l'autre.

5. Butée de débrayage suivant l'une quelconque des revendications 2, 3, caractérisée en ce que les deux agrafes (29) sont globalement dans l'alignement l'une de l'autre, en étant orientées en sens opposés l'une par rapport à l'autre.

6. Butée de débrayage suivant l'une quelconque des revendications 1 à 5, et dans laquelle, s'agissant d'une butée de débrayage autocentreuse à autocentrage maintenu, l'élément d'attaque (12) est monté mobile transversalement en tous sens par rapport à l'élément de manoeuvre (10) et est soumis à des moyens élastiques à action axiale propres à le solliciter en direction de ce dernier, caractérisée en ce que lesdits moyens élastiques à action axiale sont eux aussi d'un seul tenant avec la plaque (11), en appartenant, comme elle et comme les agrafes (29), à la pièce (23).

7. Butée de débrayage suivant la revendication 6, caractérisée en ce que les moyens élastiques à action axiale sont formés par les agrafes (29).

8. Butée de débrayage suivant les revendications 3 et 7, prises conjointement, caractérisée en ce que celle (31) des branches d'une agrafe (29) qui forme un retour est élastiquement déformable.

9. Butée de débrayage suivant la revendication 8, caractérisée en ce que l'extrémité de ladite branche (31) est globalement arrondie, avec sa concavité dirigée du côté opposé au bras (24) correspondant de la plaque (11).

10. Butée de débrayage suivant la revendication 1, caractérisée en ce que, pour coopération avec les agrafes (29) formant les moyens d'attelage, l'élément d'attaque (12) présente, latéralement, en positions globalement diamétralement opposées l'un par rapport à l'autre, deux bras (19).

11. Butée de débrayage suivant la revendication 10, caractérisée en ce que, l'élément d'attaque (12) prenant appui axialement sur l'élément de manoeuvre (10) par une collerette radiale (18) qu'il présente annulairement à cet effet, lesdits bras (19) forment chacun respectivement des prolongements radiaux de ladite collerette (18).

12. Butée de débrayage suivant la revendication 11, caractérisée en ce que chacun desdits bras (19) a globalement un contour en trapèze isocèle en se raccordant par sa grande base à la collerette radiale dont il est issu.

13. Butée de débrayage suivant l'une quelconque des revendications 10 à 12, caractérisée en ce que pour l'un au moins des bras (19) de l'élément d'attaque (12) l'élément de manoeuvre (10) présente axialement en saillie au moins un ergot (20) au droit de la tranche dudit bras (19).

14. Butée de débrayage suivant l'une quelconque des revendications 1 à 13, caractérisée en ce que des doigts en équerre (34) étant prévus pour assurer le maintien axial de la butée de débrayage vis-à-vis de son organe de commande, lesdits doigts en équerre (34) sont d'un seul tenant avec la plaque (11), en appartenant, comme elle, et comme les moyens d'attelage, à la pièce (23).

15. Butée de débrayage suivant l'une quelconque des revendications 1 à 14, caractérisée en ce que, ceux des bords de ces bras (24) de la plaque (11) qui sont en regard l'un de l'autre sont chacun bordés par un retour en équerre d'un seul tenant avec ladite plaque (11).

16. Butée de débrayage suivant la revendication 1, caractérisée en ce que, l'élément de manoeuvre (10) étant destiné à être soumis à un organe de commande par l'intermédiaire, soit directement, soit indirectement, d'une plaque (11), dite plaque d'appui, la plaque (54) dite ci-après plaque d'attelage avec laquelle les agrafes (59) sont d'un seul tenant appartient à une pièce (53) distincte de ladite plaque d'appui (11).

17. Butée de débrayage suivant la revendication 16, caractérisée en ce que la plaque d'attelage (54) est en appui axial contre la plaque d'appui (11), soit directement, soit indirectement.

18. Butée de débrayage suivant la revendication 17, caractérisée en ce que la plaque d'attelage (54) est directement superposée à la plaque d'appui (11).

19. Butée de débrayage suivant l'une quelconque des revendications 16 à 18, caractérisée en ce que, la plaque d'appui (11) comportant, en positions diamétralement opposées l'un par rapport à l'autre, pour l'appui des doigts (45) de l'organe de commande (60), deux bras (46), les bras (55) de la plaque d'attelage (54) s'étendent sensiblement perpendiculairement à ces bras (46), à distance de ceux-ci.

20. Butée de débrayage suivant l'une quelconque des revendications 16 à 19, caractérisée en ce que, l'élément de manoeuvre (10) comportant, radialement en saillie, pour le blocage en rotation de la plaque d'appui (11), au moins un bossage (47), la plaque d'attelage (54) porte radialement contre ledit bossage (47) par la tranche de son contour interne, pour son propre blocage en rotation.

21. Butée de débrayage suivant la revendication 20, caractérisée en ce que, deux bossages (47) à facette plane (26) étant prévus en positions diamétralement opposées l'un par rapport à l'autre sur l'élément de manoeuvre (10), le bord interne des bras (55) de la plaque d'attelage (54) est rectiligne sur une partie au moins de sa longueur, pour contact avec la facette plane (26) desdits bossages (47).

22. Butée de débrayage suivant l'une quelconque des revendications 16 à 21, caractérisée en ce que chacune des agrafes (59) a globalement une configuration en U, avec l'une (61) de ses branches formée au moins pour partie par l'un des bras (55) de la plaque d'attelage (54) et l'autre (62) formant un retour globalement parallèlement à celui-ci.

23. Butée de débrayage suivant la revendication 22, caractérisée en ce que les deux branches (61, 62) d'une agrafe (59) sont décalées non seulement axialement mais encore radialement l'une par rapport à l'autre, celle (62) formant un retour pour le bras (55) correspondant de la plaque d'attelage (54) étant globalement plus éloignée de l'axe de l'ensemble que celle (61) formée au moins pour partie par un tel bras (55).

24. Butée de débrayage suivant l'une quelconque des revendications 22, 23, caractérisée en ce que les deux agrafes (59) formant les moyens d'attelage sont globalement parallèles l'une à l'autre.

## Claims

1. A clutch release bearing in particular for an automobile vehicle, of the kind comprising an operating element (10) which is intended to be controlled, directly or indirectly, by a control member, in practice a clutch release fork, a drive element (12) which, intended to act on the clutch release device of a clutch, directly or indirectly bears axially on the operating element (10), and coupling means which axially couple the said drive element (12) to the said operating element (10), characterized in that the said coupling means are in one piece with a substantially flat plate (11, 54) which overall has a U-shaped configuration, with two arms (24, 55) generally parallel to each other, joined together by a curved middle part (25, 56) in the form of an arch, which form two clips (29, 59) disposed in positions generally diametrically opposite one another and each respectively originating from the arms (24, 55) of the said plate (11, 54), the whole being part of one and the same piece (23, 53).

2. A clutch release bearing according to claim 1, characterized in that the operating element (10) being intended to be controlled by a control member through the intermediation, directly or indirectly, of a plate, called a bearing plate, the plate (11) which is in one piece with the clips (29) itself forms the said bearing plate.

3. A clutch release bearing according to claim 2, characterized in that each of the clips (29) itself has a generally U-shaped configuration, with one (30) of its branches formed at least in part by the arm (24) of the plate (11) from which it originates and the other forming a return generally parallel to this.

4. A clutch release bearing according to any one of claims 2 or 3, characterized in that the two clips (29) are generally parallel to one another.

5. A clutch release bearing according to any one of claims 2 or 3, characterized in that the two clips (29) are generally in alignment with one another being orientated in opposite directions relative to each other.

6. A clutch release bearing according to any one of claims 1 to 5 in which, concerning a self-centering clutch release bearing with constant self-centering, the drive element (12) is mounted to move transversely in all directions relative to the operating element (10) and is acted upon by axially acting elastic means suitable to drive it towards the latter, characterized in that the said axially acting elastic means are also in one piece with the plate (11) and like it and like the clips (29) are part of the same piece (23).

7. A clutch release bearing according to claim 6, characterized in that the axially acting elastic means are formed by the clips (29).

8. A clutch release bearing according to claims 3 and 7 taken together, characterized in that the branch (31) of a clip (29) which forms a return is elastically deformable.

9. A clutch release bearing according to claim 8, characterized in that the end of the said branch (31) is generally rounded with its concavity facing away from the corresponding arm (24) of the plate (11).

10. A clutch release bearing according to claim 1, characterized in that in order to cooperate with the clips (29) forming the coupling means, the drive element (12) has two lateral arms (19) in positions generally diametrically opposite one another.

11. A clutch release bearing according to claim 10, characterized in that the drive element (12) bears axially against the operating element (10) through an annular radial collar (18) which it has for this purpose, the said arms (19) each forming respectively a radial extension of the said collar (18).

12. A clutch release bearing according to claim 11, characterized in that each of the said arms (19) has a generally isosceles trapezium-shaped contour and is joined by its large base to the radial collar from which it originates.

13. A clutch release bearing according to any one of claims 10 to 12, characterized in that with one at least of the arms (19) of the drive element (12), the operating element (10) has at least one axially projecting lug (20) in line with the edge of the said arm (19).

14. A clutch release bearing according to any one of claims 1 to 13, characterized in that right-angled fingers (34) are provided for axial retention of the clutch release bearing relative to its control unit and the said right-angled fingers (34) are in one piece with the plate (11) like it, and like the coupling means, being part of the piece (23).

15. A clutch release bearing according to any one of claims 1 to 14, characterized in that those edges of the arms (24) of the plate (11) which face each other are each bordered by a right-angled lip in one piece with the said plate (11).

16. A clutch release bearing according to claim 1, characterized in that the operating element (10) being intended to be controlled by a control member through the intermediation, directly or indirectly, of a plate (11), called a bearing plate, the plate (54), hereafter called the coupling plate, with which the clips (59) are in one piece is part of a piece (53) distinct from the said bearing plate (11).

17. A clutch release bearing according to claim 16, characterized in that the coupling plate (54) bears axially on the bearing plate (11) either directly or indirectly.

18. A clutch release bearing according to claim 17, characterized in that the coupling plate (54) is directly superposed on the bearing plate (11).

19. A clutch release bearing according to any one of claims 16 to 18, characterized in that the bearing plate (11) comprises two arms (46) in positions diametrically opposite relative to one another for the fingers (45) of the control member (60) to bear on, the arms (55) of the coupling plate (54) extending substantially perpendicularly to these arms (46) at a distance from them.

20. A clutch release bearing according to any one of claims 16 to 19, characterized in that the operating element (10) comprising at least one radially projecting boss (47) to stop rotation of the bearing plate (11), the coupling plate (54) bears radially against the said boss (47) through the edge of its inside contour to prevent it rotating.

21. A clutch release bearing according to claim 20, characterized in that two bosses (47) with a flat facet (26) are provided in positions diametrically opposite relative to one another on the operating element (10), and the inner edge of each arm (55) of the coupling plate (54) is straight over at least part of its length, in order to make contact with the flat facets (26) of the said bosses (47).

22. A clutch release bearing according to any one of claims 16 to 21, characterized in that each of the clips (59) has a generally U-shaped configuration with one (61) of its branches formed at least in part by one of the arms (55) of the coupling plate (54) and the other (62) forming a return generally parallel to this.

23. A clutch release bearing according to claim 22, characterized in that the two branches (61, 62) of a clip (59) are offset not only axially but also radially relative to one another, the one (62) forming a return for the corresponding arm (55) of the coupling plate (54) being generally further from the axis of the assembly than that (61) formed at least in part by such an arm (55).

24. A clutch release bearing according to any one of claims 22 or 23, characterized in that the two clips (59) forming the coupling means are generally parallel to each other.


**Patentansprüche**

1. Kupplungsausrücker, insbesondere für ein Kraftfahrzeug, mit einem Betätigungselement (10), das entweder unmittelbar oder mittelbar einem Steuerorgan ausgesetzt ist, praktisch einer Ausrückgabel, mit einem Angriffselement (12), das ausgelegt ist, auf die Ausrückvorrichtung einer Kupplung einzuwirken und entweder unmittelbar oder mittelbar in axialer Anlage an dem Betätigungselement-(10) anliegt, und mit Befestigungsmitteln, die in axialer Richtung das Angriffselement (12) mit dem Betätigungselement (10) verbinden, dadurch gekennzeichnet, daß die Befestigungsmittel einstückig mit einer Platte (11, 54) ausgebildet sind, die, im wesentlichen eben, allgemein die Form eines U aufweist, mit zwei Armen (24, 55), die sich im wesentlichen parallel zueinander erstrecken und durch einen gekrümmten Mittelabschnitt (25, 56) in Form eines Bügels miteinander verbunden sind und sich auf zwei Klammern (29, 59) reduzieren, die an im wesentlichen einander diametral gegenüberliegenden Stellen angeordnet sind und jeweils von den Armen (24, 55) der Platte (11, 54) ausgehen, wobei die Anordnung aus einem Teil (23, 53) besteht.

2. Kupplungsausrücker nach Anspruch 1, dadurch gekennzeichnet, daß das Betätigungselement (10) entweder unmittelbar oder mittelbar unter Zwischenschaltung einer Platte, als Abstützplatte bezeichnet, einem Steuerorgan ausgesetzt ist, wobei die Platte (11), an denen die Klammern (29) einstückig ausgebildet sind, selber die Abstützplatte bildet.

3. Kupplungsausrücker nach Anspruch 2, dadurch gekennzeichnet, daß die Klammern (29) selber im wesentlichen die Form eines U aufweisen, wobei einer seiner Schenkeln (30) zumindest teilweise durch den Arm (24) der Platte (11) gebildet wird, von dem er ausgeht und der andere (31) eine im wesentlichen parallel zu diesem verlaufende Umbiegung bildet.

4. Kupplungsausrücker nach einem der Ansprüche 2, 3, dadurch gekennzeichnet, daß die beiden Klammern (29) im wesentlichen parallel zueinander sind.

5. Kupplungsausrücker nach einem der Ansprüche 2, 3, dadurch gekennzeichnet, daß die beiden Klammern (29) im wesentlichen in einer Linie zueinander verlaufen, wobei sie zueinander in entgegengesetzte Richtungen ausgerichtet sind.

6. Kupplungsausrücker nach einem der Ansprüche 1 bis 5, wobei, wenn es sich um einen selbstzentrierenden Kupplungsausrücker mit aufrechterhaltener Selbstzentrierung handelt, das Angriffselement (12) bezüglich des Betätigungselements (10) in Querrichtung beliebig bewegbar und Federmitteln mit axialer Wirkrichtung ausgesetzt ist, die es in Richtung des letzteren belasten, dadurch gekennzeichnet, daß die Federmittel mit axialer Wirkrichtung selber einstückig mit der Platte (11) ausgebildet sind und wie diese und die Klammern (29) dem Teil (23) angehören.

7. Kupplungsausrücker nach Anspruch 6, dadurch gekennzeichnet, daß die Federmittel mit axialer Wirkrichtung von den Klammern (29) gebildet sind.

8. Kupplungsausrücker nach Anspruch 3 und 7 gemeinsam, dadurch gekennzeichnet, daß derjenige Schenkel einer Klammer (29), der eine Umbiegung bildet, federnd verformbar ist.

9. Kupplungsausrücker nach Anspruch 8, dadurch gekennzeichnet, daß das Ende des genannten Schenkels (31) im wesentlichen abgerundet ist, wobei seine konkave Höhlung dem zugeordneten Arm (24) der Platte (11) abgewandt ist.

10. Kupplungsausrücker nach Anspruch 1, dadurch gekennzeichnet, daß das Angriffselement (12) zum Zusammenwirken mit den die Befestigungsmittel bildenden Klammern (29) seitlich an im wesentlichen diametral gegenüberliegenden Stellen zwei Arme (19) aufweist.

11. Kupplaungsausrücker nach Anspruch 10, dadurch gekennzeichnet, daß das Angriffselement (12) sich über einen radialen Kragen (18), den es zu diesem Zweck ringförmig aufweist, in axialer Richtung auf dem Betätigungselement (10) abstützt, wobei die Arme (19) jeweils radiale Verlängerungen des genannten Kragens (18) bilden.

12. Kupplungsausrücker nach Anspruch 11, dadurch gekennzeichnet, daß jeder der Arme (19) im wesentlichen die Kontur eines gleichschenkligen Trapezes aufweist und dabei mit ihrer großen Basis mit dem radialen Kragen verbunden ist, von dem er ausgeht.

13. Kupplungsausrücker nach mindestens einem der Ansprüche 10 bis 12, dadurch gekennzeichnet, daß für zumindest einen der Arme (19) des Angriffselements (12) das Betätigungselement (10) axial vorspringend gegenüber dem Rand des Arms (19) zumindest einen Vorsprung (20) aufweist.

14. Kupplungsausrücker nach mindestens einem der Ansprüche 1 bis 13, dadurch gekennzeichnet, daß abgewinkelte Finger (34) vorgesehen sind, um die axiale Lagehaltung des Kupplungsausrückers bezüglich seines Steuerorgans sicherzustellen, wobei die abgewinkelten Finger (34) einstückig mit der Platte (11) ausgebildet sind und wie diese und wie die Befestigungsmittel dem Teil (23) angehören.

15. Kupplungsausrücker nach mindestens einem der Ansprüche 1 bis 14, dadurch gekennzeichnet, daß diejenigen Ränder dieser Arme (24) der Platte (11), die sich einander gegenüberliegen, von einer rechtwinkligen Umbiegung begrenzt sind, die einstückig mit der Platte (11) ausgebildet ist.

16. Kupplungsausrücker nach Anspruch 1, dadurch gekennzeichnet, daß Betätigungselement (10) entweder unmittelbar oder mittelbar unter Zwischenschaltung einer Platte (11), als Abstützplatte bezeichnet, einem Steuerorgan ausgesetzt ist, wobei die Platte (54), nachfolgend als Befestigungsplatte bezeichnet, an der die Klammern (59) einstückig ausgebildet sind, einem Teil (53) zugehört, das von der Abstützplatte (11) getrennt ist.

17. Kupplungsausrücker nach Anspruch 16, dadurch gekennzeichnet, daß die Befestigungsplatte (54) entweder unmittelbar oder mittelbar axial gegen die Abstützplatte (11) anliegt.

18. Kupplungsausrücker nach Anspruch 17, dadurch gekennzeichnet, daß die Befestigungsplatte (54) unmittelbar auf die Abstützplatte (11) aufgelegt ist.

19. Kupplungsausrücker nach mindestens einem der Ansprüche 16 bis 18, dadurch gekennzeichnet, daß die Abstützplatte (11) an einander gegenüberliegenden Positionen zur Anlage von Fingern (45) des Steuerorgans (60) zwei Arme (46) besitzt, wobei die Arme (55) der Befestigungsplatte (54) sich in einem Abstand im wesentlichen senkrecht zu diesen Armen (46) erstrecken.

20. Kupplungsausrücker nach mindestens einem der Ansprüche 16 bis 19, dadurch gekennzeichnet, daß das Betätigungselement (10) radial vorspringend zum Blockieren der Drehung der Abstützplatte (11) zumindest einen Vorsprung (47) besitzt und die Befestigungsplatte (54) radial mit dem Rand ihrer Innenkontur zum Zwecke des Blockierens seiner Rotation radial gegen den Vorsprung (47) drückt.

21. Kupplungsausrücker nach Anspruch 20, dadurch gekennzeichnet, daß zwei Vorsprünge (47), mit einer Planfläche (26) an diametral einander gegenüberliegenden Positionen an dem Betätigungselement (10) ausgebildet sind, wobei der Innenrand der Arme (55) der Befestigungsplatte (54) zumindest über einen Bereich seiner Länge geradlinig verläuft, um einen Kontakt mit der ebenen Fläche (26) der Vorsprünge (47) herbeizuführen.

22. Kupplungsausrücker nach mindestens einem der Ansprüche 16 bis 21, dadurch gekennzeichnet, daß jede der Klammern (59) im wesentlichen die Gestalt eines U besitzt, wobei der eine seiner Schenkel zumindest zum Teil durch einen der Arme (55) der Befestigungsplatte (54) geformt wird und der andere (62) eine im wesentlichen parallel zu diesem verlaufende Umbiegung bildet.

23. Kupplungsausrücker nach Anspruch 22, dadurch gekennzeichnet, daß die beiden Schenkel (61, 62) einer Klammer (59) nicht nur in axialer Richtung, sondern auch radial gegeneinander versetzt sind, wobei derjenige (62) der für den entsprechenden Arm (55) der Befestigungsplatte (54) eine Umbiegung bildet, im wesentlichen weiter von der Achse der Anordnung entfernt ist, als derjenige Schenkel (61), der zumindest teilweise von dem Arm (55) gebildet wird.

24. Kupplungsausrücker nach einem der Ansprüche 22, 23, dadurch gekennzeichnet, daß die beiden Klammern (59), welche die Befestigungsmittel bilden, im wesentlichen parallel zueinander angeordnet sind.

FIG.2

FIG.1

FIG.3

FIG.4

FIG.5

FIG.6

FIG.7

FIG.8

FIG.9

FIG.10

FIG.11

3

0 196 966

FIG.13

FIG.12

FIG.14

FIG.15

5